Europäisches Patentamt

European Patent Office

Office européen des brevets

(11) Publication number: **0 271 288**
A2

# (12) EUROPEAN PATENT APPLICATION

(21) Application number: 87310651.2

(22) Date of filing: 03.12.87

(51) Int. Cl.⁴: **B 32 B 17/10**
C 03 C 27/12, B 44 F 1/06

(30) Priority: 05.12.86 GB 8629177

(43) Date of publication of application:
15.06.88 Bulletin 88/24

(84) Designated Contracting States:
BE CH DE FR GB IT LI NL SE

(71) Applicant: DELTAGLASS S.A.
4 Route de Beaumont
CH-1700 Fribourg (CH)

(72) Inventor: Jarrett, Kenneth Barry
22 Cumberland Street
Woodbridge Suffolk (GB)

(74) Representative: Cropp, John Anthony David et al
MATHYS & SQUIRE 10 Fleet Street
London, EC4Y 1AY (GB)

(54) Laminates.

(57) A laminate having attractive visual properties comprises two transparent sheets each of organic or inorganic glass and, between the sheets an interlayer of filamentary or fibrous material, which is preferably lustrous and is bonded to each of the sheets by transparent adhesive comprising a cured radiation-curable liquid composition.

Fig.1

EP 0 271 288 A2

**Description**

LAMINATES

This invention relates to laminates and in particular to the production of decorative glass laminates.

It is known to produce a laminate by interposing a sheet of plastics material between two sheets of glass and bonding the plastics material to each of the two glass sheets by means of an adhesive composition. In a recent development the bonding is effected by means of an adhesive composition which is cured by irradiation, most usually UV irradiation. One preferred class of UV curable adhesive compositions comprises urethane acrylates in polymerisable diluents and particularly advantageous compositions are disclosed in EP-A-0108631 and EP-A-0108630. This development has made possible the use of vinyl chloride polymer as the plastics material in place of the more expensive polyvinyl butyral which has been conventionally employed. By vinyl chloride polymer is meant a homopolymer of vinyl chloride or a copolymer containing a major proportion of vinyl chloride. Such laminates find applications as safety glass.

EP-A-238301 describes a safety glass laminate of similar kind in which the plastics material interlayer comprises two outer layers each of plastics film with an inner layer of fabric interposed therebetween.

Hitherto, it has been thought that if filamentary or fibrous materials were employed as the interlayer rather than a sheet of plastics material a sufficiently strong bond could not be obtained between the interlayer and each glass sheet. This is one of the reasons why in EP-A-238301 the fabric is employed between two layers of plastics film.

It has now been found however, that strongly-bonded laminates can be produced in which two glass sheets are bonded directly to a filamentary or fibrous interlayer. Moreover, products having a variety of interesting properties depending on the nature of that interlayer can be obtained.

In accordance with the present invention there is provided a laminate comprising two transparent glass sheets with a filamentary or fibrous material interlayer therebetween and wherein the interlayer is bonded to each of the sheets by transparent adhesive comprising a cured radiation-curable liquid composition.

By suitable choice of the interlayer highly decorative laminates may be produced while maintaining a strong bond between the glass sheets and the interlayer.

Each glass sheet may be provided by organic or inorganic glass. Tinted or coloured glass may be employed. By "organic glass" is meant a polymeric material employed as a glass substitute, for example, methacrylate polymer such as that marketed under the trade names Perspex and Lucite, or polycarbonate. Thus, for the avoidance of doubt, in this specification and word "glass" includes both organic and inorganic glass.

Advantageously, the cured adhesive has a refractive index which is equal or similar to that of each glass sheet. This reduces the visibility of the boundaries between each glass sheet and the interlayer and results in a laminate in which the filamentary or fibrous material may appear to be embedded in a solid slab of clear glass. This enhances the visual effect and enables special effects to be achieved when certain interlayers are employed.

Surprisingly, particularly where the material for the interlayer is made from lustrous fibres or filaments or is material which appears lustrous because of the weave employed or because of a way in which the surface of that material has been treated, the material which is included in a laminate as described appears to be brighter and patterns on that material appear more distinct, than in the case of the same material when not embedded in laminate.

The reason for the enhanced brightness and distinctiveness of the material interlayer is not fully understood. While the applicant does not want to be bound by theory it is considered that the effect may arise, particularly in the case of woven cloth, from wetting of the material by the adhesive and subsequent trapping of that material in the wetted state within the cured adhesive.

The filamentary or fibrous material employed as the interlayer may be woven or unwoven, eg. as in a felt or paper, and patterned or plain. Preferably the material comprises woven cloth.

In general, the nature of the fibre or filament is more important than the material from which it is formed. It is important that the fibrous or filamentary material is wettable by the radiation curable liquid adhesive composition, that it is not bulky and in particular that it is not hairy; that is, it does not contain a large number of very fine loose fibres which will present a very large surface area and result in the material having a low bulk density, eg. as in mohair. In general, fine fibres and filaments of regular cross-section are preferred. Suitable fibres include, for example, natural fibres such as cellulose, silk or cotton, synthetics such as polyester, acrylics, polypropylene, viscose and polyamides (nylons), carbon and graphite fibres, metal fibres, metallised fibres and glass fibres and mixtures thereof eg. as in polyester/cotton.

When the material is translucent, which is often the case for woven cloth or thin paper, the decorative effect of laminates according to the invention can be particularly appealing to the eye. This is especially the case when a light source is provided to shine through the laminate. By a translucent material is meant a material which is inherently translucent or a material which is translucent because light can shine through interstices in the material as, for example, through the pores formed by the weave of a woven material. The use of a lustrous material, for example natural or artificial silk, satin made from natural or synthetic material, and certain materials made of rayon, viscose or polyester, can add to this appealing result.

In order to produce a strong bond between the interlayer and each of the glass sheets material should be one that can easily be wetted and from which air bubbles can easily be removed eg. by simple pressure. Because thicker cloths such as corduroy or woollen cloth require substantially more adhesive in order to be wetted sufficiently to bond and thereby produce a thicker bond of reduced strength, and because they can also trap air bubbles, such materials are not preferred. Preferably, the material should be less than 1 millimetre thick, more preferably less than 500 microns and most preferably less than 250 microns.

Wire mesh, polyester mesh or nylon mesh may also be used as the material for the interlayer. One source of such mesh is that used as screens for silkscreen printing and which is available in mesh sizes from very fine to very coarse. Conductive materials may also be employed as may materials made of other fibres or filaments having special properties.

If desired, more than one layer of filamentary or fibrous material may be used.

A particularly suitable radiation-curable liquid composition for use as the adhesive is one which contains urethane acrylate in a polymerisable diluent, especially a composition as described in EP 0108631 or EP 0108630. UV curable compositions are preferred.

Laminates according to the present invention may be employed, for example, as glass tops for tables, glass panelling, drinks coasters, decorative screens and shower panels, or as decorative glass covers for light sources. Another possible use is as sliding panes for greenhouses whereby an ordinary glass pane may be replaced by a laminate according to the invention to provide shade on days of strong sunshine. In the case where the interlayer is wire mesh the laminate may be employed where a security glass is required. Where conductive fibres or filaments are employed panels may be produced which are capable of being illuminated.

Laminates according to the present invention may be manufactured by known techniques. For example, by applying a layer of liquid radiation-curable adhesive composition to the top surface of a glass sheet, placing the material for the interlayer onto the adhesive layer, applying a second layer of liquid radiation-curable adhesive composition onto the free surface of that material and placing a second glass sheet onto that second adhesive layer. The material may be rolled onto and into the adhesive with the application of pressure to remove air bubbles. The bonds are formed by curing the adhesive layers by irradiation, preferably by UV light.

In the case of laminates of the kind described in EP-A-238301 where a plastics interlayer with an inner layer of fabric is employed, the production of that interlayer normally involves the use of heat to seal the fabric within the plastic sheet and this may damage heat-sensitive fabrics such as silk and synthetics. The laminates of the present invention avoid the need for such heat treatment and can therefore be manufactured with more delicate interlayers than has previously been possible.

The production of laminates according to the present invention is easier than that for the previously shown laminates having a plastics interlayer when the material selected for the interlayer is less stiff than plastics material and therefore more easily laid onto the adhesive layer. Production is facilitated for the case where the interlayer material is of a kind which would previously have been placed between two layers of plastics sheet before inclusion in a laminate since the latter interlayer is necessarily more bulky and stiff than the former.

Laminates according to the present invention may be cheaper than these having an interlayer of plastics material although this will of course depend on the actual interlayer chosen. The laminates of the present invention have wider applications than previously known laminates. For example, plastics material is heat and light sensitive and thus, with suitable choice of interlayer, the laminates of the present invention may be used where previous laminates would have suffered heat or light damage.

While the invention has been described above with particular reference to the case where the interlayer between the glass sheets consists only of one or more layers of filamentary or fibrous material, it is to be understood that other layers may also be included eg. to achieve an even greater variety of visual effects. For example, the layer or layers of filamentary fibrous material may be used in conjunction with a plastics film which may lie between a layer of said material and one of the sheets of glass or between two layers of the fibrous or filamentary material. Improvements in impact strength may be achieved by suitable choice of plastics material such as plasticised vinyl chloride polymer.

In the case where such a layer is included, the laminate may be built up layer by layer, with an application of liquid radiation-curable adhesive composition between each pair of layers, much as described above. Where the layers are translucent to the radiation employed to cure the adhesive, the whole assembly may in some cases by cured by a single pass through a radiation zone but in other cases it may be necessary to include an intermediate curing step before applying further coatings of adhesive and layers.

It is to be understood that laminates of the kind comprising two sheets each of organic or inorganic glass which are spaced apart by an interlayer comprising two outer layers each of plastics film with an inner layer of fabric therebetween are excluded from the scope of the present invention.

The invention will now be described by way of example with reference to the accompanying drawings which are perspective views (part cut away) of laminates according to the invention.

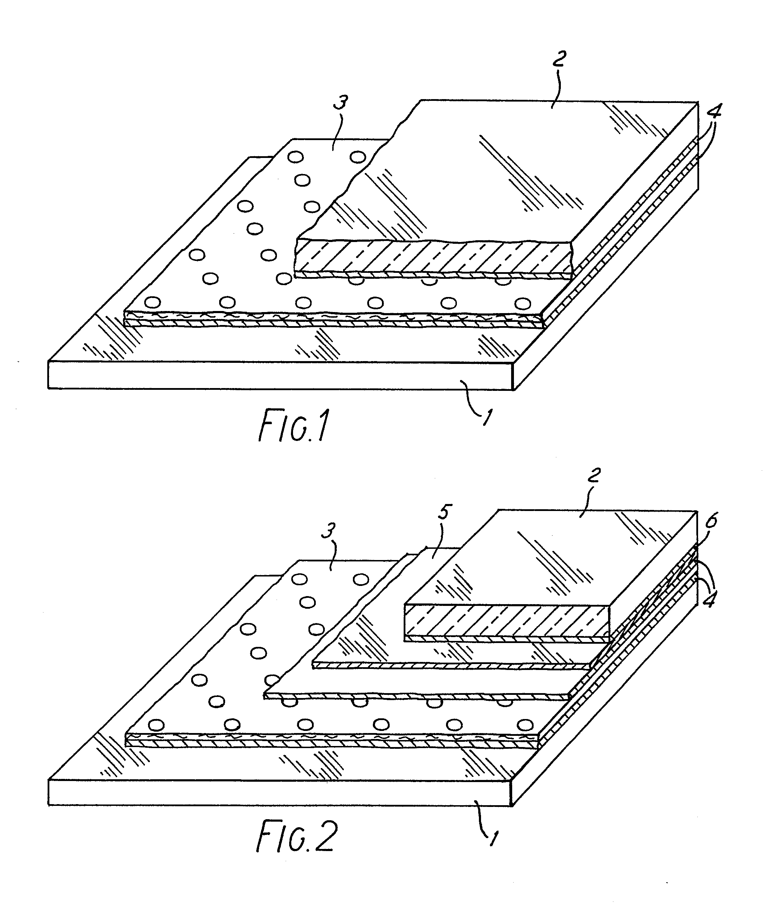

In the embodiment illustrated in Figure 1, 1 and 2 are inorganic glass sheets bonded to an interlayer 3 of patterned silk by a cured radiation-curable liquid adhesive composition 4.

The embodiment illustrated in Figure 2 further includes a layer of plasticised vinyl chloride polymer film 5 between the interlayer 3 and one of the glass sheets 2. The film 5 is bonded to this glass sheet by a further layer of adhesive 6.

**Claims**

1. A laminate comprising two transparent glass sheets with a filamentary or fibrous material interlayer therebetween and wherein the interlayer is bonded to each of the sheets by transparent adhesive comprising a cured radiation-curable liquid composition.

2. A laminate as claimed in claim 1 wherein the cured adhesive has a refractive index equal or similar to that of each glass sheet.

3. A laminate as claimed in claim 1 or 2 wherein the interlayer material is translucent.

4. A laminate as claimed in any one of claims 1 to 3 wherein the interlayer is woven cloth.

5. A laminate as claimed in claim 4 wherein the woven cloth is lustrous.

6. A laminate as claimed in claim 5 wherein the lustrous woven cloth is natural or artificial silk, satin made from natural or synthetic material or a material made from rayon, viscose or polyester.

7. A laminate as claimed in any one of claims 1 to 6 wherein the radiation-curable liquid composition comprises urethane acrylate in a polymerisable diluent.

8. A laminate as claimed in any one of claims 1 to 7 wherein said interlayer comprises a plurality of layers each of filamentary or fibrous material.

9. A laminate as claimed in any one of claims 1 to 8 which further includes a layer of plastics film between a glass sheet and a layer of filamentary or fibrous material or between two layers of filamentary or fibrous material.

0271288

FIG.1

FIG.2